# EUROPEAN PATENT APPLICATION

(11) **EP 2 015 460 A1**
(43) Date of publication of application: **14.01.2009**
(21) Application number: 07741687.3
(22) Date of filing: 16.04.2007
(51) Int. Cl.: H04B 1/10, H04B 1/16, H04B 1/26, H04N 5/44

(54) **RECEIVING DEVICE, ELECTRONIC DEVICE USING THE SAME, AND RECEIVING METHOD**

(30) Priority: 24.04.2006 JP 2006118891
(71) Applicant: Panasonic Corporation, Kadoma-shi Osaka 571-8501 (JP)
(72) Inventor: HAMADA, Masahiro c/o Panasonic Corporation, Chuo-ku, Osaka-shi, Osaka 540-6207 (JP); KASHIMA, Yukiro Panasonic Corporation, Chuo-ku, Osaka-shi, Osaka 540-6207 (JP)
(74) Representative: Ehlers, Jochen
(86) International application number: PCT/JP2007/058251
(87) International publication number: WO 2007/125775

(57) **Abstract**

A receiving device is used that includes a main tuner 11, a sub-tuner 12, and a control unit 13 is used. The main tuner 11 and the sub-tune 12 have local oscillators 25, 45, respectively, for generating local oscillation signals according to frequencies of selected channels, and extract signals on the selected channels by using the local oscillation signals. The control unit 13 judges whether the frequency of the channel selected by the main tuner 11 is identical to the frequency of the channel selected by the sub-tuner 12. When it is judged that they are identical, the control unit 13 stops the generation of the local oscillation signal by the local oscillator 45 of the sub-tuner 12 and causes the sub-tuner 12 to extract the signal on the selected channel by using the local oscillation signal generated by the local oscillator 25 of the main tuner.

## Description

### Technical Field

The present invention relates to a receiving device including two tuners, and particularly relates to a receiving device that includes two tuners for receiving television broadcast such as community antenna television (CATV) broadcast, terrestrial digital television broadcast, or the like and that is to be installed in a set-top box, a television set, or the like.

### Background Art

In recent years, a television set has been required to have a dual screen display function for displaying two programs on one screen at the same time, or a two-program recording function for recording two programs concurrently. To cope with such a demand, sometimes a television set, a set-top box for CATV connected with a television set, or a recorder is equipped with two tuners (dual tuner).

Incidentally, a receiving device incorporating a dual tuner, a channel selected by a tuner usually used (main tuner), and a channel selected by a tuner supportively used (sub-tuner), coincide occasionally.

For example, in the case of dual screen display, a user causes one screen to display a program on a channel selected by the main tuner, while causing the other screen to display a program on a channel selected by the sub-tuner, by switching the channel from one to another. In this case, the channels selected by the two tuners temporarily coincide with each other. Besides, the coincidence of the channels selected by the two tuners occurs when a program on the channel selected by the main tuner is recorded by a recording device and a user causes the sub-tuner to select the same channel as the channel for the program being recorded.

However, in the case where the same channel is selected by the main tuner and the sub-tuner, local oscillation signals of the tuners are supposed to have the same frequency, but actually the frequencies of the channels are not identical to each other, but have a subtle deviation therebetween owing to an error between the local oscillators. Therefore, the two local oscillators cause spectrum interference with each other, and phase noise degradation of local oscillation signals occurs. As a result, the display screen has image quality deterioration, or even a blackout, in some cases.

To solve such a problem, conventionally, a receiving device has been proposed that is configured so that when a main tuner operates, a frequency that adversely affects the main tuner should not be set by the sub-tuner (see Patent Document 1, for example).

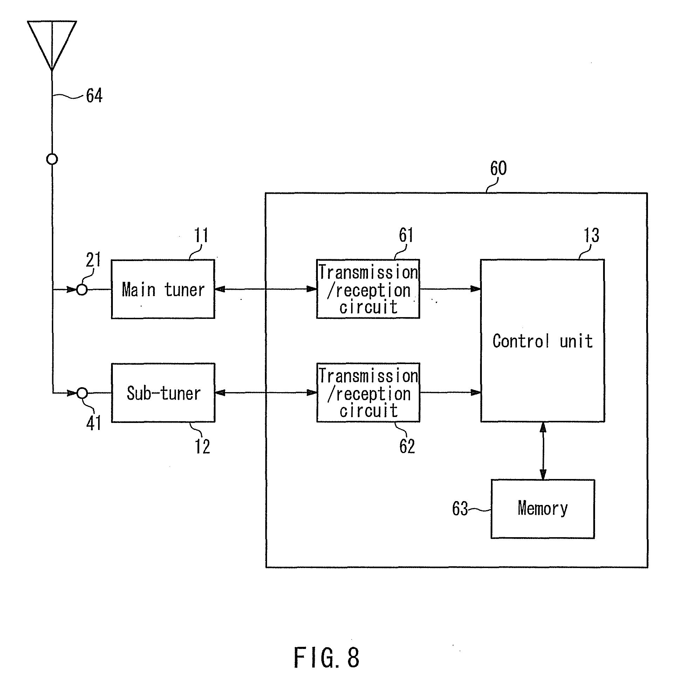

FIG. 8 shows a configuration of a receiving device that includes a conventional dual tuner. As shown in FIG. 8, the receiving device includes a main tuner 11, a sub-tuner 12, and a main control unit 60 for controlling these tuners. The main tuner 11 also has an input terminal 21 to which broadcast waves received by an antenna 64 are fed. Likewise, the sub-tuner 12 also has an input terminal 41 to which broadcast waves received by the antenna 64 are fed.

The main control unit 60 includes a transmission/reception circuit 61 that performs the transmission/reception of signals with the main tuner 11, a transmission/reception circuit 62 that performs the transmission/reception of signals with the sub-tuner 12, a control unit 13, and a memory 63. The control unit 13 is formed with, for example, a microcomputer. As to each channel to be selected by the main tuner 11, the memory 63 stores which channels are inhibited from being selected by the sub-tuner 12. It should be noted that in the case where the receiving device is a receiving device for television broadcast, the channel that is inhibited from being selected by the sub-tuner is the same as the channel selected by the main tuner 11.

The control unit 13 first determines whether or not the main tuner 11 is operating. If the main tuner 11 is operating, the control unit 13 accesses to the memory 63, and retrieves frequencies that, when being selected by the sub-tuner 12, adversely affect the receiving operation of the main tuner 11. Subsequently, when the sub-tuner 12 selects a frequency (channel) that adversely affects the operation of the main tuner 11, the control unit 13 inhibits the foregoing frequency from being set in the sub-tuner 12.

Thus, the receiving device according to Patent Document 1 restricts the channel selected by the sub-tuner 12 when the main tuner 11 is operating, thereby avoiding the image quality deterioration and blackout of the display screen.
Patent document 1: JP 10(1998)-93513 A (pages 3 to 4, FIG. 1)

### Disclosure of Invention

### Problem to be Solved by the Invention

However, with the above-described conventional receiving device, particularly in the case where the receiving device is a receiving device for television broadcast, it is impossible to cause the main tuner and the sub-tuner to operate concurrently to select the same channel. Therefore, when dual screen display is performed, there is a restriction such that two screens are not allowed to display the same program on the same channel concurrently.

Further, when the receiving device is used by allocating the main tuner for displaying, and the sub-tuner for recording, there is a restriction such that the same channel as that the user is watching cannot be selected as a channel subjected to recording.

On the other hand, spectrum interference caused by the respective local oscillators of the tuners when the same channel is selected by the tuners can be resolved also by increasing the distance between the main tuner and the sub-tuner in the receiving device, or by shielding the two tuners separately with a metal. In the case where such means is adopted, there is no need to limit the channel selection by the sub-tuner, and the main tuner and the sub-tuner are allowed to select the same channel. However, in the case where such means is adopted, other problems arise such as the size increase of the receiving device, the increase of the cost of manufacturing, etc.

It is an object of the present invention to resolve the above-described problems, and to provide a receiving device that allows two tuners to select the same channel, without the upsizing of the device or the increase of the cost of manufacturing; electronic equipment incorporating such a receiving device; and a receiving method.

### Means for Solving Problem

In order to achieve the above-described object, a receiving device of the present invention includes a first tuner and a second tuner to which broadcast waves are fed, and a control unit, wherein each of the first and second tuners includes a local oscillator for generating a local oscillation signal according to a frequency of a selected channel, and extracts a signal on the selected channel from the broadcast waves by using the local oscillation signal. The control unit determines whether or not the frequency of the channel selected by the first tuner and the frequency of the channel selected by the second tuner are identical to each other, and when determining that they are identical, the control unit causes the local oscillator of the second tuner to stop the generation of the local oscillation signal and causes the second tuner to extract the signal on the selected channel by using the local oscillation signal generated by the local oscillator of the first tuner.

Further, in order to achieve the above-described object, electronic equipment of the present invention includes a receiving device, the receiving device including a first tuner and a second tuner to which broadcast waves are fed, and a control unit, wherein each of the first and second tuners includes a local oscillator for generating a local oscillation signal according to a frequency of a selected channel, and extracts a signal on the selected channel from the broadcast waves by using the local oscillation signal. The control unit determines whether or not the frequency of the channel selected by the first tuner and the frequency of the channel selected by the second tuner are identical to each other, and when determining that they are identical, the control unit causes the local oscillator of the second tuner to stop the generation of the local oscillation signal and causes the second tuner to extract the signal on the selected channel by using the local oscillation signal generated by the local oscillator of the first tuner.

Further, in order to achieve the above-described object, a method of the present invention is a method for receiving broadcast waves, using a first tuner and a second tuner, each of the first and second tuners including a local oscillator for generating a local oscillation signal according to a frequency of a selected channel, and extracting a signal on the selected channel from the broadcast waves by using the local oscillation signal. The method includes the steps of: (a) determining whether or not the frequency of the channel selected by the first tuner and the frequency of the channel selected by the second tuner are identical to each other; (b) when it is determined in the step (a) that the frequencies are identical, causing the local oscillator of the second tuner to stop the generation of the local oscillation signal; and (c) when it is determined in the step (a) that the frequencies are identical, causing the second tuner to extract the signal on the selected channel by using the local oscillation signal generated by the local oscillator of the first tuner.

### Effects of the Invention

As described above, in the present invention, when the first and second tuners select the same channel, i.e., the same frequency, the oscillation by the local oscillator of the second tuner is stopped. Then, the second tuner performs the channel selection by using the local oscillation signal fed from the first tuner.

Therefore, the local oscillator of the first tuner and the local oscillator of the second tuner do not cause spectrum interference with each other, and phase noise degradation of the local oscillation signal also is suppressed. Thus, both the tuners are allowed to select the same channel, i.e., the same frequency. Here, there is no need to increase the distance between the tuners or to enhance the shielding properties of the tuners. Therefore, with the present invention, the receiving device can be downsized, and the increase of the cost of manufacturing can be suppressed, too.

### Brief Description of Drawings

[FIG. 1] FIG. 1 is a block diagram illustrating a schematic configuration of the receiving device according to Embodiment 1 of the present invention.
[FIG. 2] FIG. 2 is a flowchart showing a flow of the receiving method according to Embodiment 1 of the present invention.
[FIG. 3] FIG. 3 shows a schematic configuration of a digital television set incorporating a receiving device according to Embodiment 1 of the present invention.
[FIG. 4] FIG. 4 is an external view showing an example of the receiving device according to the present embodiment 1.
[FIG. 5] FIG. 5 is an external view showing another example of the receiving device according to the present embodiment 1.
[FIG. 6] FIG. 6 is a block diagram showing a schematic configuration of the receiving device according to Embodiment 2 of the present invention.
[FIG. 7] FIG. 7 is a block diagram showing a schematic configuration of a receiving device according to Embodiment 3 of the present invention.
[FIG. 8] FIG. 8 shows a configuration of a receiving device that includes a conventional dual tuner.

### Description of the Invention

A receiving device of the present invention includes a first tuner and a second tuner to which broadcast waves are fed, and a control unit, wherein each of the first and second tuners includes a local oscillator for generating a local oscillation signal according to a frequency of a selected channel, and extracts a signal on the selected channel from the broadcast waves by using the local oscillation signal. The control unit determines whether or not the frequency of the channel selected by the first tuner and the frequency of the channel selected by the second tuner are identical to each other, and when determining that they are identical, the control unit causes the local oscillator of the second tuner to stop the generation of the local oscillation signal and causes the second tuner to extract the signal on the selected channel by using the local oscillation signal generated by the local oscillator of the first tuner.

The foregoing receiving device of the present invention preferably is configured so that the first tuner has an output terminal, and feeds, to the second tuner, the local oscillation signal generated by the local oscillator of the first tuner, via the output terminal; and the second tuner has an input terminal via which the local oscillation signal fed by the first tuner via the output terminal is fed into the second tuner.

The foregoing receiving device of the present invention preferably is configured so as further to include one case having an electromagnetic wave shielding function, wherein the first and second tuners are housed in the case together.

The foregoing receiving device of the present invention preferably is configured so as further to include an IC chip, wherein the first and second tuners are formed by electric circuits; and the IC chip contains a part or an entirety of the electric circuits forming the first tuner and a part or an entirety of the electric circuits forming the second tuner.

The foregoing receiving device of the present invention preferably is configured so that the first tuner includes a frequency divider that divides a frequency of the local oscillation signal generated by the local oscillator of the first tuner, thereby generating a frequency division signal, and feeds the frequency division signal to the second tuner. The second tuner includes a frequency multiplier that multiplies a frequency of the frequency division signal, thereby generating a frequency multiplication signal. When the control unit determines that the frequency of the channel selected by the first tuner and the frequency of the channel selected by the second tuner are identical to each other, the control unit causes the second tuner to extract the signal on the selected channel by using the frequency multiplication signal. With this configuration, unnecessary radiation that the receiving device generates is decreased, and when the receiving device is formed into an IC chip, the frequency of the local oscillation signal can be converted to a frequency that hardly causes interference with another circuit signal in the IC chip.

Alternatively, the foregoing receiving device of the present invention preferably is configured so that the first tuner includes an attenuator that attenuates the local oscillation signal generated by the local oscillator of the first tuner, thereby generating an attenuation signal, and feeds the attenuation signal to the second tuner. The second tuner includes an amplifier that amplifies the attenuation signal, thereby generating an amplification signal; and when the control unit determines that the frequency of the channel selected by the first tuner and the frequency of the channel selected by the second tuner are identical to each other, the control unit causes the second tuner to extract the signal on the selected channel by using the amplification signal. In the case of this configuration, unnecessary radiation that the receiving device generates is decreased, and when the receiving device is formed into an IC chip, the frequency of the local oscillation signal can be converted to a frequency that hardly causes interference with another circuit signal in the IC chip.

Further, electronic equipment of the present invention is electronic equipment including a receiving device, the receiving device including a first tuner and a second tuner to which broadcast waves are fed, and a control unit, wherein each of the first and second tuners includes a local oscillator for generating a local oscillation signal according to a frequency of a selected channel, and extracts a signal on the selected channel from the broadcast waves by using the local oscillation signal. The control unit determines whether or not the frequency of the channel selected by the first tuner and the frequency of the channel selected by the second tuner are identical to each other, and when determining that they are identical, the control unit causes the local oscillator of the second tuner to stop the generation of the local oscillation signal and causes the second tuner to extract the signal on the selected channel by using the local oscillation signal generated by the local oscillator of the first tuner.

Still further, a method of the present invention for receiving broadcast waves is a method for receiving broadcast waves, using a first tuner and a second tuner, each of the first and second tuners including a local oscillator for generating a local oscillation signal according to a frequency of a selected channel, and extracting a signal on the selected channel from the broadcast waves by using the local oscillation signal. The method includes the steps of: (a) determining whether or not the frequency of the channel selected by the first tuner and the frequency of the channel selected by the second tuner are identical to each other; (b) when it is determined in the step (a) that the frequencies are identical, causing the local oscillator of the second tuner to stop the generation of the local oscillation signal; and (c) when it is determined in the step (a) that the frequencies are identical, causing the second tuner to extract the signal on the selected channel by using the local oscillation signal generated by the local oscillator of the first tuner.

Still further, the present invention may be a program for embodying the above-described receiving method of the present invention. By installing this program in a computer and executing the same, the receiving method of the present invention is executed.

The present invention, with the above-described features, enables the selection of the same channel by two tuners, without the upsizing of the device or the increase of the cost of manufacturing.

### Embodiment 1

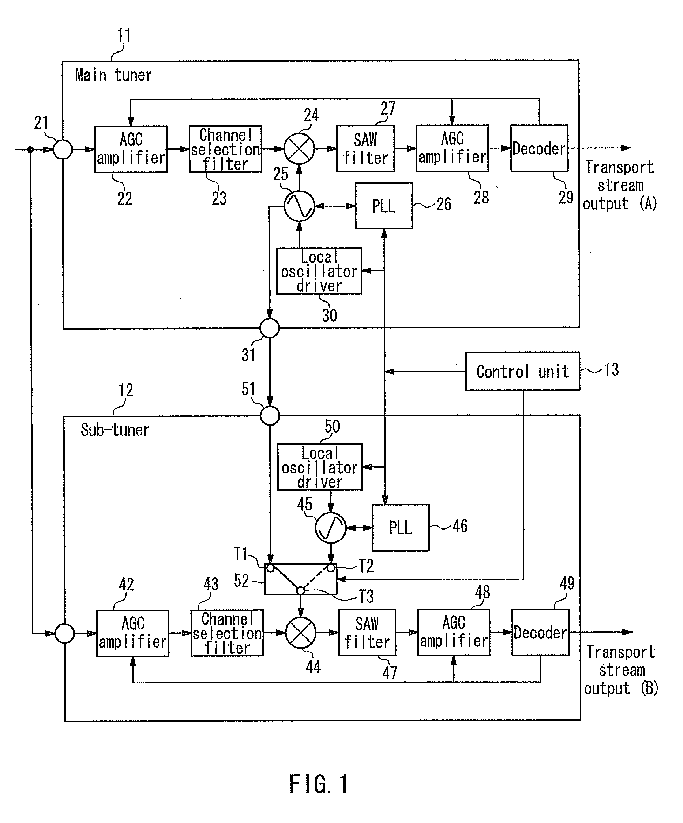

The following describes a receiving device, electronic equipment, and a broadcast wave receiving method according to Embodiment 1 of the present invention, while referring to FIGS. 1 to 5. First, a configuration of a receiving device according o the present embodiment 1 is described, with reference to FIG. 1. FIG. 1 is a block diagram illustrating a schematic configuration of the receiving device according to Embodiment 1 of the present invention.

The receiving device according to the present embodiment 1 is a receiving device (dual tuner system) for digital television broadcast that incorporates a dual tuner. The receiving device according to the present embodiment 1 adopts the superheterodyne method.

As shown in FIG. 1, the receiver according to the present embodiment includes, roughly speaking, a usually used tuner (main tuner) 11, and a supportively used tuner (sub-tuner) 12, and a control unit 13. The control unit 13 is formed of a microcomputer, for example, as is the case with the conventional example shown in FIG. 8. However, the control unit 13 shown in FIG. 1 is different from the conventional example regarding the operation, as will be described later.

The main tuner 11 includes an input terminal 21, AGC amplifiers 22 and 28, a channel selection filter 23, a mixer 24, a local oscillator 25, a PLL 26, a SAW filter 27, a decoder 29, and a local oscillator driver 30. Likewise, the sub-tuner 12 includes an input terminal 41, AGC amplifiers 42 and 48, a channel selection filter 43, a mixer 44, a local oscillator 45, a PLL 46, a SAW filter 47, a decoder 49, and a local oscillator driver 50.

The input terminals 21 and 41 both are antenna input terminals to which broadcast waves received by an antenna (not shown in FIG. 1) are fed. The AGC amplifiers 22 and 42 perform gain adjustment with respect to broadcast signals carried on the broadcast waves, respectively. The channel selection filter 23 and 43 extract broadcast signals in bands of broadcasting services that cover the selected channels, among various broadcasting services with different bands, such as terrestrial digital broadcast, BS digital broadcast, CS broadcast, and the like.

The local oscillators 25 and 45 generate local oscillation signals according to the frequencies of the selected channels, respectively. More specifically, in the local oscillators 25 and 45, the frequencies of the local oscillation signals are set by the PLLs (phase locked loops) 26 and 46 corresponding thereto, respectively, in accordance with instructions of the control unit 13. The control unit 13 causes the PLLs to operate according to the frequencies of the channels selected by the user, respectively. In response to an instruction of the control unit 13, the local oscillator drivers 30 and 50 cause the corresponding local oscillator to generate a local oscillation signal, or to stop the generation of a local oscillation signal.

The mixers 24 and 44 mix broadcast signals and local oscillation signals, to downconvert the broadcast signals fed thereto. The SAW filters 27 and 47 extract intermediate frequency signals (IF signals) having set frequencies, from the signals downconverted by the corresponding mixers, respectively. As a result, signals of selected channels are extracted, respectively.

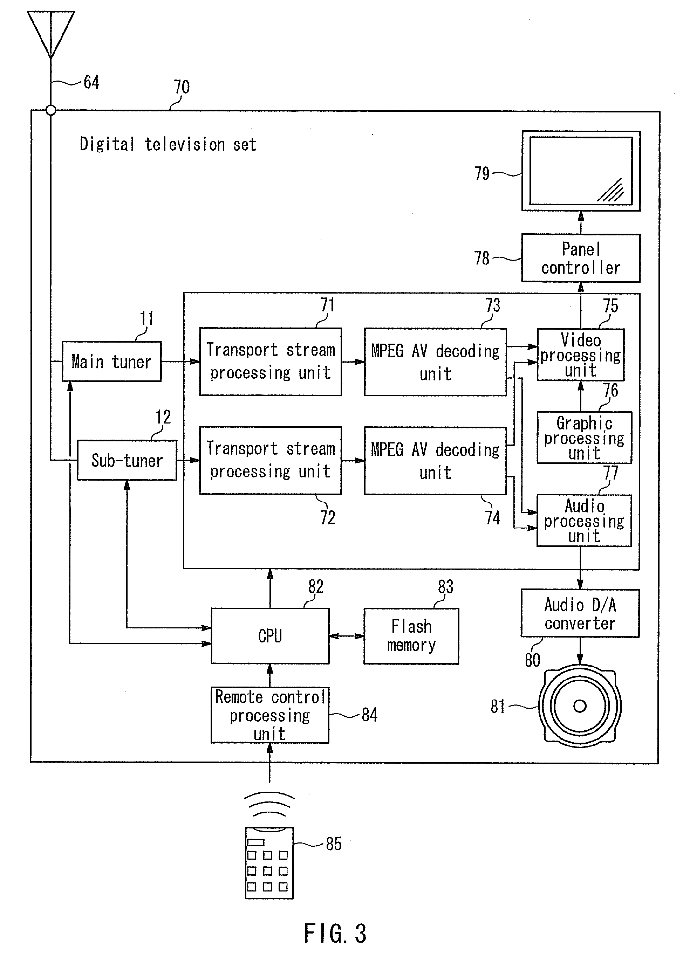

The AGC amplifiers 28 and 48 perform gain adjustment with respect to IF signals extracted by the SAW filters 27 and 47, respectively. The decoders 29 and 49 decode the gain-adjusted IF signals, respectively, and output transport streams. The decoder 29 adjusts the outputs of the AGC amplifiers 22 and 28, by feedback control based on an amplitude of the IF signal fed thereto. Likewise, the decoder 49 also adjusts the outputs of the AGC amplifiers 42 and 48, by feedback control based on an amplitude of the IF signal fed thereto. A transport stream output (A) obtained by the decoder 29 and a transport stream output (B) obtained by the decoder 49 are fed to the transport stream processing units, respectively (see FIG. 3), in the case where the receiving device is a digital television set.

With the above-described configuration, the channels selected by the user for the tuners, respectively, are set in the main tuner 11 and the sub-tuner 12, respectively, by the control unit 13, whereby the programs on the selected channels are received. The main tuner 11 and the sub-tuner 12 have the same configuration, and are capable of selecting channels independently; in this point, the receiving device according to the present embodiment 1 is similar to the conventional receiving device. However, the receiving device according to the present embodiment 1 is different from the conventional receiving device in the point described below.

As shown in FIG. 1, the main tuner 11 is capable of feeding a local oscillation signal generated by the local oscillator 25 thereof to the sub-tuner 12. The sub-tuner 12 is capable of extracting a signal (IF signal) of the selected channel, using the local oscillation signal generated by the local oscillator 25 of the main tuner 11.

More specifically, in the present embodiment 1, the main tuner 11 has an output terminal (local oscillation signal output terminal) 31. The main tuner 11 is capable of feeding a local oscillation signal generated by the local oscillator 25 to the second tuner 12. The sub-tuner 12 has an input terminal (local oscillation signal input terminal) 51 for receiving the local oscillation signal fed from the main tuner 11.

The sub-tuner 12 also has a switch 52. The switch 52 is a selector switch that has terminals T1 to T3 and switches between the terminals T1 and T3 or between the terminals T2 and T3. Further, the terminal T1 is connected with the local oscillation signal input terminal 51, and the terminal T2 is connected with the local oscillator 45. The terminal T3 is connected with the mixer 44.

Therefore, in the sub-tuner 12, by a switching operation by the switch 52, either the local oscillation signal from the local oscillator 45 or the local oscillation signal from the local oscillation signal input terminal 51 is selected, and is fed to the mixer 44. In the latter case in particular by using the local oscillation signal generated by the local oscillator 25 of the main tuner 11, the extraction of the IF signal is carried out. The switching operation of the switch 52 is controlled by the control unit 13.

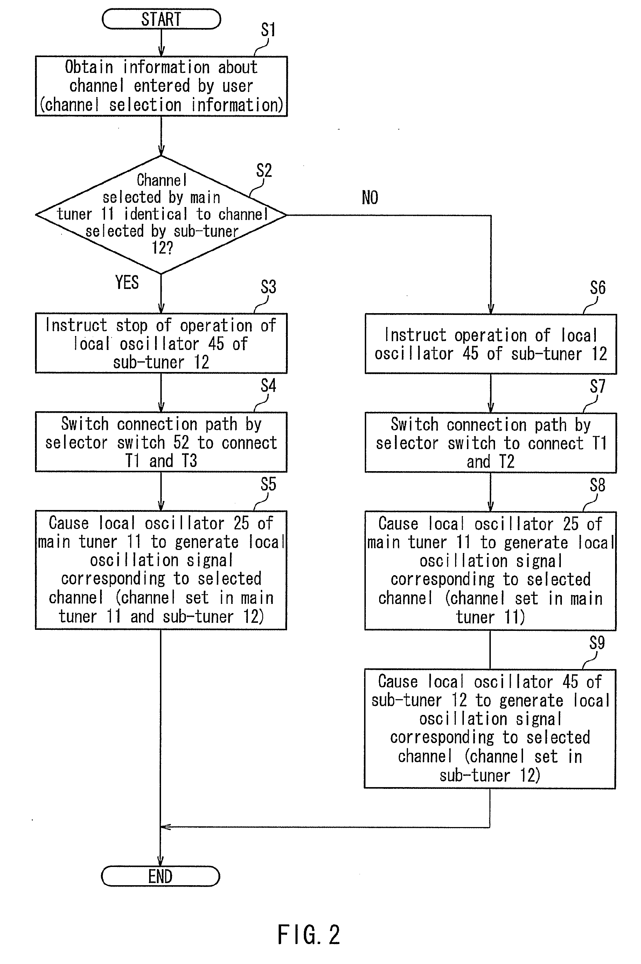

Here, the receiving method according to the present embodiment 1 is described with reference to FIG. 2. The receiving method according to the present embodiment 1 is used for receiving broadcast waves of digital television broadcast. FIG. 2 is a flowchart showing a flow of the receiving method according to Embodiment 1 of the present invention. It should be noted that in the present embodiment 1, the receiving method according to Embodiment 1 of the present invention is executed by operating the control unit 13. Therefore, in the following description, the processing operation in the control unit 13 also is described with reference to FIG. 1.

First, as shown in FIG. 2, the control unit 13 obtains information (channel selection information) regarding the channel that the user has entered (Step 1). Specifically, when the receiving device according to the present embodiment 1 is installed in a television set, the user enters the number of the channel that the user intends to select by using a remote controller, for example. The control unit 13 identifies the selected channel according to the signal transmitted from the user's remote controller, and obtains channel selection information as a result.

Next, the control unit 13 determines whether or not the channel selected by the main tuner 11 by the user, and the channel selected by the sub-tuner 12 are identical, i.e., whether or not respective receive frequencies of the tuners are identical (Step S2). When determining that they are identical, the control unit 13 executes Steps S3 to S5 described later. On the other hand, when determining that they are not identical, the control unit 13 executes Steps S6 to S9 described later.

More specifically, when determining at Step S2 that they are identical, the control unit 13 instructs the local oscillator driver 50 of the sub-tuner 12 to stop the operation of the local oscillator 45 (Step S3). With this, the operation of the local oscillator 45 stops, whereby the generation of the local oscillation signal is stopped.

Next, the control unit 13 connects the terminals T1 and T3 with each other, so as to switch a connection path by using the switch (selector switch) 52 (Step S4). This results in a path being formed that allows a local oscillation signal generated by the local oscillator 25 of the main tuner 11 to be fed to the mixer 44 of the sub-tuner 12.

Next, the control unit 13 causes the local oscillator 25 of the main tuner 11 to generate a local oscillation signal, so as to correspond to the selected channel, based on the channel selection information obtained at Step S1 (Step S5). The local oscillation signal is fed to both the mixer 24 of the main tuner 11 and the mixer 44 of the sub-tuner 12, and with use of this local oscillation signal, the same channel is received by the main tuner 11 and the sub-tuner 12 both.

On the other hand, when it is determined at Step S2 the receive frequencies are not identical to each other, the control unit 13 instructs the local oscillator driver 50 of the sub-tuner 12 to cause the local oscillator 45 to start operating (Step S6). It should be noted that the embodiment may be such that when the local oscillator 45 has been operating already, the control unit 13 makes no instruction, and Step S6 is omitted.

Next, the control unit 13 connects the terminals T2 and T3 with each other, so as to switch a connection path by using the switch (selector switch) 52 (Step S7). This results in a path being formed that allows a local oscillation signal generated by the local oscillator 45 of the sub-tuner 12 to be fed to the mixer 44 of the sub-tuner 12.

Thereafter, the control unit 13, like at Step S5, causes the local oscillator 25 of the main tuner 11 to generate a local oscillation signal, so as to correspond to the channel selected by the main tuner 11, based on the channel selection information obtained at Step S1 (Step S8). The local oscillation signal generated at Step S8 is fed to only the mixer 24 of the main tuner 11, unlike at Step S5.

Further, the control unit 13 causes the local oscillator 45 of the sub-tuner 12 to generate a local oscillation signal, so as to correspond to the channel selected by the sub-tuner 12, based on the channel selection information obtained at Step S1 (Step S9). The local oscillation signal generated at Step S9 is fed to the mixer 44 of the sub-tuner 12. In the case where Steps S6 to S9 are executed in this manner, the main tuner 11 and the sub-tuner 12 operate independently, thereby receiving different channels, respectively.

As described above, in the present embodiment 1, when the main tuner 11 and the sub-tuner 12 both select the same channel, i.e., the same frequency with each other, the oscillation of the local oscillator 45 of the sub-tuner 12 is stopped. In the sub-tuner 12, the channel selection is executed according to the local oscillation signal fed from the main tuner 11.

Therefore, the local oscillator 25 of the main tuner 11 and the local oscillator 45 of the sub-tuner 12 do not cause spectrum interference with each other, and phase noise degradation of local oscillation signals is suppressed. With the present embodiment 1, it is possible to avoid the above-described problems, and to allow the tuners to select the same channel, i.e., the same frequency with each other. Here, it is unnecessary to increase the distance between the tuners, or to enhance the shielding property of each tuner. Therefore, the downsizing of the receiving device is achieved, and the increase of the cost of manufacturing is suppressed.

Further, the present embodiment 1 may be such that when the user selects single screen display, or when the displaying and the recording are not executed concurrently, the control unit 13 causes the local oscillator 45 of the sub-tuner 12 to stop the generation of the local oscillation signal. This is because in such a case, only the channel selection by the main tuner 11 is sufficient, and the channel selection by the sub-tuner 12 is not needed.

According to this embodiment, unnecessary local oscillation by the sub-tuner 12 is not carried out, and hence, an unnecessary signal is not generated. Therefore, a possibility that an unnecessary signal degrades the receiving performance of the main tuner 11 can be eliminated, whereby the reliability of the receiving device can be enhanced. Further, unnecessary radiation from the receiving device can be decreased. Therefore, the present embodiment is particularly effective in the case where the receiving device is configured as an IC chip.

Further, the receiving device according to the present embodiment 1 can be achieved also by connecting the main tuner 11 and the sub-tuner 12 with a general-purpose computer, for example. In this case, a program that embodies Steps S1 to S9 shown in FIG. 2 may be installed in the computer, and this program may be executed, whereby the receiving device according to the present embodiment 1 can be achieved. Here, a CPU (central processing unit) of the computer functions as the control unit 13.

Next, electronic equipment incorporating the receiving device according to the present embodiment 1 is described. In the present embodiment 1, the electronic equipment is not particularly limited as long as it is equipment capable of incorporating the receiving device shown in FIG. 1. Specifically, a television set, a set-top box (STB), a recorder, a car navigation system, a personal computer, or the like may be used.

The following describes an example of a receiving device according to the present embodiment 1 installed in a television set, while referring to FIG. 3. FIG. 3 shows a schematic configuration of a digital television set incorporating a receiving device according to Embodiment 1 of the present invention.

As shown in FIG. 3, the digital television set 70 includes a main tuner 11 and a sub-tuner 12. A CPU 82 that controls the digital television set 70 as a whole also functions as the control unit 13 of the receiving device according to the present embodiment 1 (see FIGS. 1 and 2).

More specifically, a program for embodying Steps S1 to S9 shown in FIG. 2 is recorded in a flash memory 83. When dual screen display is selected by a user via a remote controller 85 and the same channel is selected by the main tuner 11 and the sub-tuner 12, the CPU 82 retrieves the foregoing program and executes the same. As a result, with the digital television set 70 shown in FIG. 3, the same channel can be selected in dual screen display. It should be noted that a light signal such as an infrared signal or the like outputted by the remote controller 85 is converted by a remote control processing unit 84 into a digital signal, and then fed to the CPU 82.

The digital television set 70 further includes transport stream processing units 71 and 72, MPEG AV decoding units 73 and 74, a video processing unit 75, a graphic processing unit 76, and an audio processing unit 77. Still further, the digital television set 70 also includes a panel controller 78, a display panel 79, an audio D/A converter 80, and a speaker 81.

The transport stream processing units 71 and 72 are provided in the tuners, respectively. The transport stream processing units 71 and 72 extract target video signals and audio signals from the transport stream outputs (A) and (B). The extracted video and audio signals are fed to the MPEG AV decoding units 73 and 74.

The MPEG AV decoding units 73 and 74 are provided in the tuners, respectively, too. Since the extracted video and audio signals extracted by the transport stream processing units 71 and 72 are MPEG-encoded, the MPEG AV decoding units 73 and 74 MPEG-decode these signals. The MPEG-decoded video signal is fed to the video processing unit 75, while the MPEG-decoded audio signal is fed to the audio processing unit 77.

The video processing unit 75 performs processing for single screen display or dual screen display, with respect to the MPEG-decoded video signals. The video processing unit 75 synthesizes the video signal with a signal (OSD signal) for on-screen-display (OSD) generated by the graphic processing unit 76. The video signal processed by the video processing unit 75 is fed to the panel controller 78.

The panel controller 78 performs signal processing with respect to the video signal processed by the video processing unit 75 so that the signal can be used for display on the display panel 79. The display panel 79 is a plasma display panel, a liquid crystal panel, or the like, to display pictures using video signals fed thereto.

The audio processing unit 77 extracts an audio signal that the user demands, among audio signals fed thereto. For example, in the case where a main audio signal and an auxiliary audio signal are contained in audio signals, a signal of either one or both types is extracted, and is fed to the audio D/A converter 80. The audio processing unit 77 also switches an audio mode, such as a monophonic mode and a stereo mode. The audio D/A converter 80 converts a digital audio signal into an analog audio signal, and feeds the same to the speaker 81. As a result, sounds are outputted therefrom.

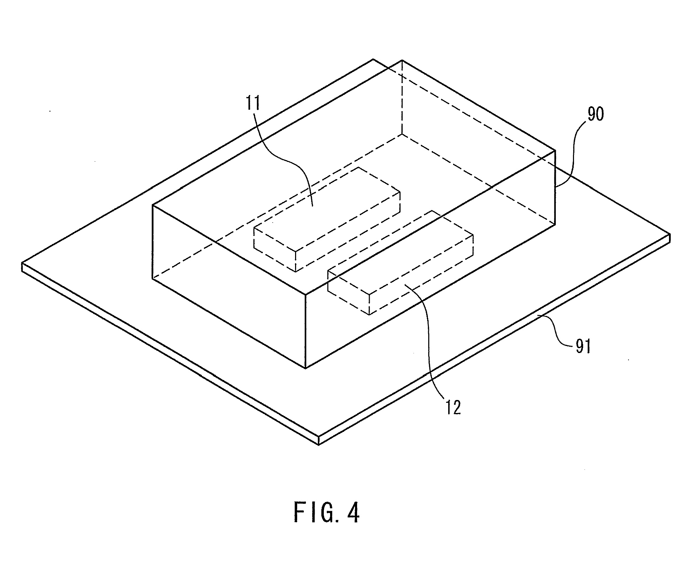

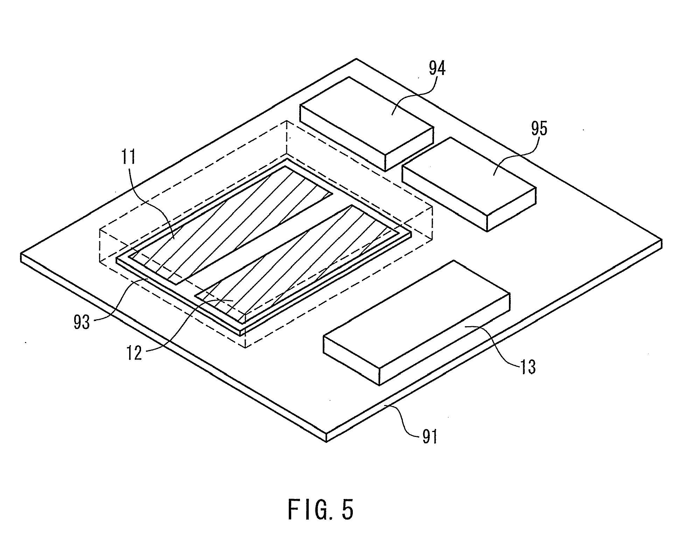

Incidentally, as described above, since the main tuner 11 and the sub-tuner 12 can be placed closer to each other according to the present embodiment 1, it is possible to downsize the receiving device. This point is explained below with reference to FIGS. 4 and 5. FIG. 4 is an external view showing an example of the receiving device according to the present embodiment 1. FIG. 5 is an external view showing another example of the receiving device according to the present embodiment 1.

In the example shown in FIG. 4, a main tuner 11 and a sub-tuner 12 are formed as independent IC chips, respectively. Each IC chip is mounted on a mounting board 91. Further, in the example shown in FIG. 4, a main tuner 11 and a sub-tuner 12 are housed together in a single case 90. The case 90 has an electromagnetic shielding function, and electromagnetic waves radiated from the main tuner 11 and the sub-tuner 12 are contained therein, so as to prevent leakage of the same to the outside. Still further, the case 90 also blocks entry of electromagnetic waves from the outside to the main tuner 11 and the sub-tuner 12.

According to the present embodiment 1, the local oscillators of the main tuner 11 and the sub-tuner 12 formed as IC chips do not cause spectrum interference with each other, and phase noise degradation is suppressed. Therefore, the main tuner 11 and the sub-tuner 12 can be placed closer, whereby the receiving device can be downsized.

Further, in the example shown in FIG. 5, a part of electric circuits forming a main tuner 11 and a part of electric circuits forming a sub-tuner 12 are integrated, and the two tuners are contained in a single IC chip 93. In FIG. 5, a broken line indicates a resin mold that composes the IC chip 93.

Thus, according to the present embodiment 1, even if the main tuner 11 and the sub-tuner 12 are encapsulated in a resin mold composing the single IC chip 93, the respective local oscillators of the tuners do not cause spectrum interference with each other in the IC chip 93, and phase noise degradation is suppressed. Therefore, the electric circuits of the two parts can be placed closer to each other, and as a result, the IC chip 93 can be downsized as much as possible.

It should be noted that in the example shown in FIG. 5, among the circuits composing the main tuner 11, the decoder 29 is formed by another IC chip 94. Likewise, among the circuits composing the sub-tuner 12, the decoder 49 is formed by another IC chip 95. Further, the control unit 13 also is provided in a form of an IC chip. The IC chips 93 to 95 and the control unit 13 are mounted on the single mounting board 91.

### Embodiment 2

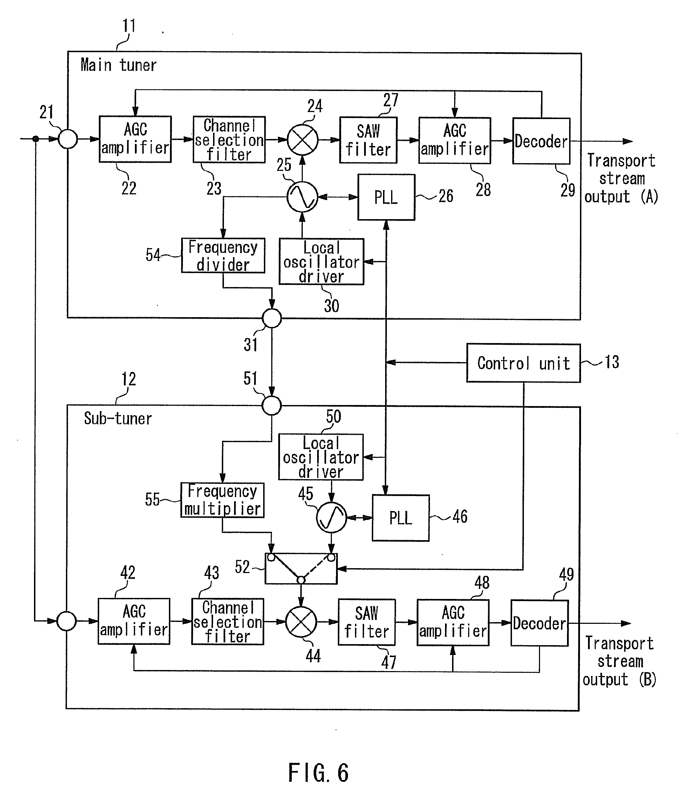

The following describes a receiving device, electronic equipment, and a broadcast wave receiving method according to Embodiment 2 of the present invention, while referring to FIG. 6. FIG. 6 is a block diagram showing a schematic configuration of the receiving device according to Embodiment 2 of the present invention.

As shown in FIG. 6, in the receiving device according to the present embodiment 2, a frequency divider 54 is provided in a main tuner 11, and a frequency multiplier 55 is provided in a sub-tuner 12; in this point, this receiving device is different from the receiving device according to Embodiment 1. As to the other points, the receiving device according to Embodiment 2 is similar to the receiving device according to Embodiment 1. The following describes the difference of Embodiment 2 from Embodiment 1.

The frequency divider 54 is disposed between a local oscillator 25 and a local oscillation signal output terminal 31 of the main tuner 11. The frequency divider 54 divides a frequency of a local oscillation signal generated by the local oscillator 25 of the main tuner 11 to 1/n-fold, thereby generating a frequency division signal. The frequency divider 54 feeds the generated frequency division signal to the sub-tuner 12.

The frequency multiplier 55 is disposed between a local oscillation signal input terminal 51 and a terminal T1 of a selector switch 52. The frequency multiplier 55 multiplies a frequency of the frequency division signal to n-fold, thereby generating a frequency multiplication signal, that is, generating the local oscillation signal generated by the local oscillator 25 of the main tuner 11. When the same channel is selected by the main tuner 11 and the sub-tuner 12, this frequency multiplication signal is fed to the mixer 44 of the sub-tuner 12. The sub-tuner 12 of the receiving device according to the present embodiment 2 extracts a signal (IF signal) on the selected channel by using this frequency multiplication signal.

Thus, according the present embodiment 2, the local oscillation signal fed from the main tuner 11 to the sub-tuner 12 is converted to a signal having a low frequency once. By so doing, unnecessary radiation generated by the receiving device is decreased. Besides, according to the present embodiment 2, when the receiving device is formed into an IC chip, the frequency of the local oscillation signal can be converted to a frequency that hardly causes interference with another circuit signal in the IC chip.

### Embodiment 3

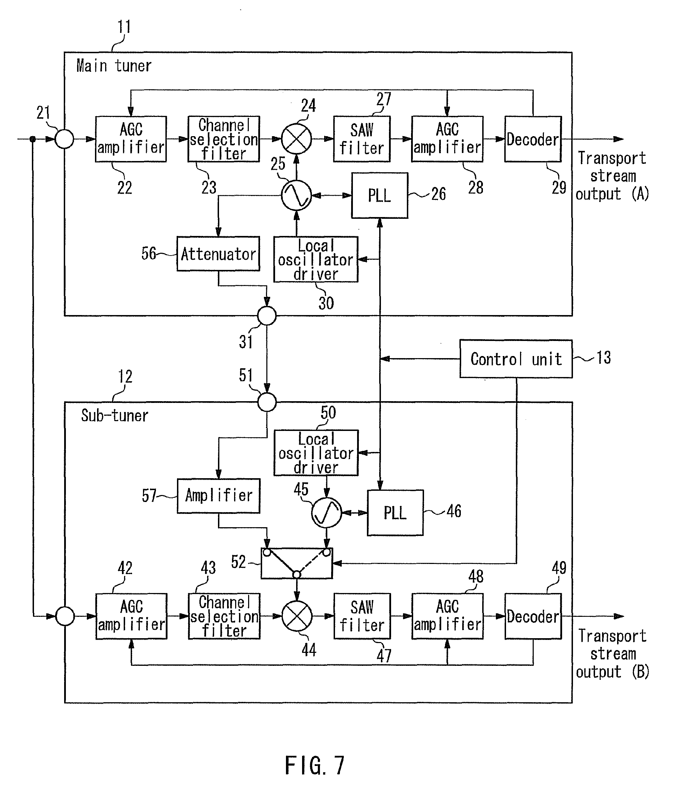

The following describes a receiving device, electronic equipment, and a broadcast wave receiving method according to Embodiment 3 of the present invention, while referring to FIG. 7. FIG. 7 is a block diagram showing a schematic configuration of a receiving device according to Embodiment 3 of the present invention.

As shown in FIG. 7, in the receiving device according to Embodiment 3, an attenuator 56 is provided in a main tuner 11, and an amplifier 57 is provided in a sub-tuner 12; in this point, this receiving device is different from the receiving device according to Embodiment 1. As to the other points, the receiving device according to Embodiment 3 is similar to the receiving device according to Embodiment 1. The following describes the difference of Embodiment 3 from Embodiment 1.

The attenuator 56 is disposed between a local oscillator 25 and a local oscillation signal output terminal 31 of the main tuner 11. The attenuator 56 attenuates a local oscillation signal generated by the local oscillator 25 of the main tuner 11, thereby generating an attenuation signal. The attenuator 56 feeds the generated attenuation signal to the sub-tuner 12.

The amplifier 57 is disposed between a local oscillation signal input terminal 51 and a terminal T1 of a selector switch 52. The amplifier 57 amplifies the attenuation signal, thereby generating an amplification signal, that is, generating the local oscillation signal generated by the local oscillator 25 of the main tuner 11. When the same channel is selected by the main tuner 11 and the sub-tuner 12, this amplification signal is fed to the mixer 44 of the sub-tuner 12. The sub-tuner 12 of the receiving device according to the present embodiment 3 extracts a signal (IF signal) on the selected channel by using this amplification signal.

Thus, according the present embodiment 3, the local oscillation signal fed from the main tuner 11 to the sub-tuner 12 is converted to a signal having a low output level once. By so doing, unnecessary radiation that generated by the receiving device is decreased. Besides, according to the present embodiment 3, when the receiving device is formed into an IC chip, the local oscillation signal can be converted to a signal that hardly causes interference with another circuit signal in the IC chip.

### Industrial Applicability

The dual tuner system of the present invention is configured so that only when the main tuner and the sub-tuner select the same channel, i.e., the same frequency, the local oscillator of the sub-tuner is caused to stop the oscillation, and the sub-tuner performs the channel selection by switching to the local oscillation signal fed from the main tuner. This allows both the tuners to select the same channel, i.e., the same frequency, without spectrum interference between the local oscillators of the main tuner and the sub-tuner, and phase noise degradation of the local oscillation signals. With this, the tuners can be placed closer, and there is no need to enhance the shielding properties of the tuners from each other. Therefore, the present invention easily can achieve the downsizing as a dual tuner system, and is useful for a receiving device incorporating a dual tuner of a broadcast receiver typified by a set-top box or a television set applicable to CATV broadcast, BS digital broadcast, and terrestrial digital television broadcast.

## Claims

1. A receiving device comprising a first tuner and a second tuner to which broadcast waves are fed, and a control unit, wherein
each of the first and second tuners includes a local oscillator for generating a local oscillation signal according to a frequency of a selected channel, and extracts a signal on the selected channel from the broadcast waves by using the local oscillation signal, and
the control unit determines whether or not the frequency of the channel selected by the first tuner and the frequency of the channel selected by the second tuner are identical to each other, and when determining that they are identical, the control unit causes the local oscillator of the second tuner to stop the generation of the local oscillation signal and causes the second tuner to extract the signal on the selected channel by using the local oscillation signal generated by the local oscillator of the first tuner.

2. The receiving device according to claim 1, wherein
the first tuner has an output terminal, and feeds, to the second tuner, the local oscillation signal generated by the local oscillator of the first tuner, via the output terminal, and
the second tuner has an input terminal via which the local oscillation signal fed by the first tuner via the output terminal is fed into the second tuner.

3. The receiving device according to claim 1 further comprising one case having an electromagnetic wave shielding function, wherein
the first and second tuners are housed in the case together.

4. The receiving device according to claim 1 further comprising an IC chip, wherein
the first and second tuners are formed by electric circuits, and
the IC chip contains a part or an entirety of the electric circuits forming the first tuner and a part or an entirety of the electric circuits forming the second tuner.

5. The receiving device according to claim 2, wherein
the first tuner includes a frequency divider that divides a frequency of the local oscillation signal generated by the local oscillator of the first tuner, thereby generating a frequency division signal, and feeds the frequency division signal to the second tuner,
the second tuner includes a frequency multiplier that multiplies a frequency of the frequency division signal, thereby generating a frequency multiplication signal, and
when the control unit determines that the frequency of the channel selected by the first tuner and the frequency of the channel selected by the second tuner are identical to each other, the control unit causes the second tuner to extract the signal on the selected channel by using the frequency multiplication signal.

6. The receiving device according to claim 2, wherein
the first tuner includes an attenuator that attenuates the local oscillation signal generated by the local oscillator of the first tuner, thereby generating an attenuation signal, and feeds the attenuation signal to the second tuner,
the second tuner includes an amplifier that amplifies the attenuation signal, thereby generating an amplification signal, and
when the control unit determines that the frequency of the channel selected by the first tuner and the frequency of the channel selected by the second tuner are identical to each other, the control unit causes the second tuner to extract the signal on the selected channel by using the amplification signal.

7. Electronic equipment comprising a receiving device, the receiving device including a first tuner and a second tuner to which broadcast waves are fed, and a control unit, wherein
each of the first and second tuners includes a local oscillator for generating a local oscillation signal according to a frequency of a selected channel, and extracts a signal on the selected channel from the broadcast waves by using the local oscillation signal, and
the control unit determines whether or not the frequency of the channel selected by the first tuner and the frequency of the channel selected by the second tuner are identical to each other, and when determining that they are identical, the control unit causes the local oscillator of the second tuner to stop the generation of the local oscillation signal and causes the second tuner to extract the signal on the selected channel by using the local oscillation signal generated by the local oscillator of the first tuner.

8. A method for receiving broadcast waves, using a first tuner and a second tuner, each of the first and second tuners including a local oscillator for generating a local oscillation signal according to a frequency of a selected channel, and extracting a signal on the selected channel from the broadcast waves by using the local oscillation signal, the method comprising the steps of:
(a) determining whether or not the frequency of the channel selected by the first tuner and the frequency of the channel selected by the second tuner are identical to each other;
(b) when it is determined in the step (a) that the frequencies are identical, causing the local oscillator of the second tuner to stop the generation of the local oscillation signal; and
(c) when it is determined in the step (a) that the frequencies are identical, causing the second tuner to extract the signal on the selected channel by using the local oscillation signal generated by the local oscillator of the first tuner.

9. A program for causing a computer to execute reception of broadcast waves by using a first tuner and a second tuner, each of the first and second tuners including a local oscillator for generating a local oscillation signal according to a frequency of a selected channel, and extracting a signal on the selected channel from the broadcast waves by using the local oscillation signal, the program causing the computer to execute:
(a) determining processing of determining whether or not the frequency of the channel selected by the first tuner and the frequency of the channel selected by the second tuner are identical to each other;
(b) processing of, when it is determined in the processing (a) that the frequencies are identical, causing the local oscillator of the second tuner to stop the generation of the local oscillation signal; and
(c) processing of, when it is determined in the processing (a) that the frequencies are identical, causing the second tuner to extract the signal on the selected channel by using the local oscillation signal generated by the local oscillator of the first tuner.

## Amended claims

### Amended claims under Art. 19.1 PCT

**1.** (Amended) A receiving device comprising a first tuner and a second tuner to which broadcast waves are fed, and a control unit, wherein
each of the first and second tuners includes a local oscillator for generating a local oscillation signal according to a frequency of a selected channel, and extracts a signal on the selected channel from the broadcast waves by using the local oscillation signal, and
the control unit determines whether or not the frequency of the channel selected by the first tuner and the frequency of the channel selected by the second tuner are identical to each other, and when determining that they are identical, the control unit causes the local oscillator of the second tuner to stop the generation of the local oscillation signal and causes the second tuner to take in the local oscillation signal generated by the local oscillator of the first tuner and extract the signal on the selected channel.

**2.** The receiving device according to claim 1, wherein
the first tuner has an output terminal, and feeds, to the second tuner, the local oscillation signal generated by the local oscillator of the first tuner, via the output terminal, and
the second tuner has an input terminal via which the local oscillation signal fed by the first tuner via the output terminal is fed into the second tuner.

**3.** The receiving device according to claim 1 further comprising one case having an electromagnetic wave shielding function, wherein
the first and second tuners are housed in the case together.

**4.** The receiving device according to claim 1 further comprising an IC chip, wherein
the first and second tuners are formed by electric circuits, and
the IC chip contains a part or an entirety of the electric circuits forming the first tuner and a part or an entirety of the electric circuits forming the second tuner.

**5.** The receiving device according to claim 2, wherein
the first tuner includes a frequency divider that divides a frequency of the local oscillation signal generated by the local oscillator of the first tuner, thereby generating a frequency division signal, and feeds the frequency division signal to the second tuner,
the second tuner includes a frequency multiplier that multiplies a frequency of the frequency division signal, thereby generating a frequency multiplication signal, and
when the control unit determines that the frequency of the channel selected by the first tuner and the frequency of the channel selected by the second tuner are identical to each other, the control unit causes the second tuner to extract the signal on the selected channel by using the frequency multiplication signal.

**6.** The receiving device according to claim 2, wherein
the first tuner includes an attenuator that attenuates the local oscillation signal generated by the local oscillator of the first tuner, thereby generating an attenuation signal, and feeds the attenuation signal to the second tuner,
the second tuner includes an amplifier that amplifies the attenuation signal, thereby generating an amplification signal, and
when the control unit determines that the frequency of the channel selected by the first tuner and the frequency of the channel selected by the second tuner are identical to each other, the control unit causes the second tuner to extract the signal on the selected channel by using the amplification signal.

**7.** (Amended) Electronic equipment comprising a receiving device, the receiving device including a first tuner and a second tuner to which broadcast waves are fed, and a control unit, wherein
each of the first and second tuners includes a local oscillator for generating a local oscillation signal according to a frequency of a selected channel, and extracts a signal on the selected channel from the broadcast waves by using the local oscillation signal, and
the control unit determines whether or not the frequency of the channel selected by the first tuner and the frequency of the channel selected by the second tuner are identical to each other, and when determining that they are identical, the control unit causes the local oscillator of the second tuner to stop the generation of the local oscillation signal and causes the second tuner to take in the local oscillation signals generated by the local oscillator of the first tuner and extract the signal on the selected channel.

**8.** (Amended) A method for receiving broadcast waves, using a first tuner and a second tuner, each of the first and second tuners including a local oscillator for generating a local oscillation signal according to a frequency of a selected channel, and extracting a signal on the selected channel from the broadcast waves by using the local oscillation signal, the method comprising the steps of:
(a) determining whether or not the frequency of the channel selected by the first tuner and the frequency of the channel selected by the second tuner are identical to each other;
(b) when it is determined in the step (a) that the frequencies are identical, causing the local oscillator of the second tuner to stop the generation of the local oscillation signal; and
(c) when it is determined in the step (a) that the frequencies are identical, causing the second tuner to take in the local oscillation signal generated by the local oscillator of the first tuner and extract the signal on the selected channel.

**9.** (Amended) A program for causing a computer to execute reception of broadcast waves by using a first tuner and a second tuner, each of the first and second tuners including a local oscillator for generating a local oscillation signal according to a frequency of a selected channel, and extracting a signal on the selected channel from the broadcast waves by using the local oscillation signal, the program causing the computer to execute:
(a) determining processing of determining whether or not the frequency of the channel selected by the first tuner and the frequency of the channel selected by the second tuner are identical to each other;
(b) processing of, when it is determined in the processing (a) that the frequencies are identical, causing the local oscillator of the second tuner to stop the generation of the local oscillation signal; and
(c) processing of, when it is determined in the processing (a) that the frequencies are identical, causing the second tuner to take in the local oscillation signal generated by the local oscillator of the first tuner and extract the signal on the selected channel.
